# FASCICULE DE BREVET EUROPEEN

(11) **EP 0 325 509 B1**
(45) Date de publication et mention de la délivrance du brevet: **29.09.1993**
(21) Numéro de dépôt: 89400088.4
(22) Date de dépôt: 11.01.1989
(51) Int. Cl.: H04N 7/167

(54) **Dispositif de permutation de lignes de télévision par bloc**
Einrichtung zur blockweisen Fernsehzeilenpermutation
Device for the block-wise permutation of television lines

(30) Priorité: 14.01.1988 FR 8800361
(43) Date de publication de la demande: 26.07.1989
(73) Titulaire: Etablissement Public Télédiffusion de France, 75015 Paris (FR)
(72) Inventeur: Cohen, Hervé, F-75011 Paris (FR); Fouillet, Jean-Marie, F-93360 Neuilly Plaisance (FR)
(74) Mandataire: Fort, Jacques

(56) Documents cités:
- EP-A- 0 212 223
- WO-A-81/02499
- INTERNATIONAL JOURNAL OF ELECTRONICS, vol. 59, no. 4, octobre 1985, pages 501-509, Londres, GB; V. ZACHAROPOULOS et al.: "An analogue scrambling scheme for television signals"
- PATENT ABSTRACTS OF JAPAN, vol. 11, no. 396 (E-568), 24 décembre 1987, page 57 E 568; & JP-A-62 157 429 (SONY CORP.) 13-07-1987
- PATENT ABSTRACTS OF JAPAN, vol. 2, no. 99 (E-50), 17 août 1978, page 4885 E 78; & JP-A-53 63 935 (MATSUSHITA DENKI SANGYO K.K.) 07-06-1978

## Description

La présente invention concerne les dispositifs de traitement de signaux de télévision et, plus particulièrement, de permutation de lignes par bloc ; elle trouve une application particulièrement importante dans les systèmes d'embrouillage de signaux de télévision par modification de l'ordre des lignes, destinés à réserver l'accès au programme aux seuls téléspectateurs dont le récepteur est muni d'un système de désembrouillage correspondant.

Il existe de nombreux systèmes d'accès conditionnel à embrouillage des signaux de télévision. La plupart de ceux destinés aux émissions pour le public utilisent un décalage relatif des lignes utiles ou une permutation des tronçons d'une ligne coupée en un emplacement variant de façon pseudo-aléatoire. Ces solutions introduisent des limitations spatiales ou des défauts aux points de coupure.

Les systèmes d'embrouillage à permutation de lignes ne présentent pas ce défaut et maintiennent la difficulté de désembrouillage que présentent, pour les spectateurs n'ayant pas de moyens de perçage du procédé de contrôle d'accès, les systèmes à coupure et permutation. On a en conséquence déjà proposé des systèmes d'embrouillage à permutation de lignes pour la communication de programmes de télévision entre professionnels. Mais les systèmes connus incorporent pour la plupart deux mémoires utilisées alternativement en écriture suivant l'ordre naturel d'arrivée des lignes et en lecture suivant un ordre déterminé par une séquence pseudo-aléatoire ou fixe, mais différente.

L'article de V. Zacharopoulos et al "An analogue scrambling scheme for television signals" dans INTERNATIONAL JOURNAL OF ELECTRONICS, vol. 59, n° 4, Octobre 1985, pages 501-509, Londres, GB, décrit de plus un dispositif de permutation de segments d'image de télévision et d'inversion temporelle de chaque segment, de largeur non définie. Ce dispositif comporte une seule mémoire, de contenance au total des échantillons constituant l'ensemble des segments entre lesquels la permutation est réalisée, et un compteur réversible qui provoque la lecture-écriture en ordre naturel pendant le comptage, la lecture-écriture en ordre modifié pendant le décomptage.

La présente invention vise notamment à fournir un dispositif permettant de conserver intégralement la qualité de restitution des procédés connus de permutation de lignes par bloc tout en n'exigeant qu'un volume de mémoire à peu près moitié.

Dans ce but l'invention propose un dispositif de permutation, en temps réel et par bloc, de lignes d'un signal de télévision entrant, conforme à la revendication 1.

Très souvent le bloc sera constitué par l'ensemble des lignes utiles d'une trame ou d'une image de télévision. L'invention permet par exemple, dans le cas d'une image transportée par le signal de télévision à 625 lignes, de réduire la taille de mémoire à celle requise pour stocker 574 lignes utiles. L'accroissement de complexité de la partie logique du dispositif est sans commune mesure avec le gain sur le volume mémoire requis.

L'invention sera mieux comprise à la lecture de la description qui suit d'un mode particulier de mise en oeuvre de l'invention, donné à titre d'exemple non limitatif. La description se réfère aux dessins qui l'accompagnent, dans lesquels:
- la figure 1 est un schéma des opérations de permutation;
- la figure 2 est un synoptique d'un dispositif de permutation de lignes suivant l'invention, les composants étant représentés dans leur configuration lors des opérations de lecture-écriture;
- la figure 3, similaire à la figure 1, montre la configuration pendant la période de suppression de trame, c'est-à-dire de la fin de la dernière ligne vidéo active entière d'une image de signal de télévision jusqu'au début de la première ligne vidéo active entière de l'image suivante.

Avant de décrire l'invention, il peut être utile de donner une définition des termes utilisés.

On appelle "ligne vidéo active" les parties d'un signal de télévision qui correspondent à des lignes visualisables de l'image transportées par ce signal, c'est-à-dire 574 lignes dans le cas d'une image transportée par un signal de télévision à 625 lignes conforme à la norme française actuelle. Des lignes vidéo actives seront considérées comme successives lorsqu'il n'y a pas de ligne vidéo active entre les deux.

Le bloc de lignes vidéo actives sur lesquelles sera effectuée la permutation peut être tout ensemble de N lignes vidéo actives successives du signal de télévision, N étant un nombre entier constant et supérieur à 2. Dans la pratique, on utilisera en général une taille égale à celle d'une image ; mais il n'est pas indispensable de remplit cette condition.

Une opération de permutation effectuée sur un bloc consiste alors en une transformation :
- d'une première suite de N lignes vidéo active, numérotées de 1 à N (ces lignes ne se présentant pas forcément dans leur ordre d'apparition dans l'image),
- en une seconde suite de N lignes, telle que l'ensemble des N lignes de la suite transformée regroupe exactement les mêmes lignes que celui de la suite initiale, les numéros affectés aux lignes étant en général modifiés.

Le nouveau numéro affecté à une ligne dans la seconde suite est appelé le transformé du numéro dans la première suite, dans la permutation considérée.

La permutation implique que les lignes vidéo d'un signal entrant, prises dans leur ordre chronologique, et celles du signal sortant, également prises dans leur ordre chronologique, l'ordre chronologique des lignes dans les blocs du signal sortant étant en général différent de celui des lignes dans les blocs du signal entrant, puissent être représentées par une même succession de blocs de N lignes vidéo actives.

En général, les permutations appliquées à des blocs successifs ne sont pas indentiques mais constituent une succession C, appliquée à la succession A de blocs de lignes du signal entrant pour obtenir la succession B de blocs du signal sortant.

Comme on l'a déjà indiqué plus haut, les solutions classiques pour obtenir ce résultat consistent à utiliser deux mémoires ayant chacune une taille correspondante à un bloc. Les lignes du signal entrant sont inscrites dans leur ordre chronologique d'apparition à des emplacements ayant des adresses successives dans la première mémoire. La permutation s'effectue en lisant ensuite les emplacements de mémoire dans un ordre obtenu en appliquant la permutation requise à l'ordre naturel 1, 2, ... N des adresses, pendant que l'autre mémoire fonctionne en écriture.

L'invention propose de limiter la capacité de mémoire requise à celle nécessaire pour stocker un bloc complet, (c'est-à-dire à N emplacements de mémoire d'une ligne vidéo chacune) en écrivant chaque ligne entrante à l'emplacement qui vient d'être laissé libre par la lecture d'une ligne sortante.

Le procédé comportera pour cela une séquence de deux séries d'opérations:
(1) Pendant la durée de réception d'un bloc de lignes entrantes, la ligne vidéo active d'ordre i de la suite (correspondant à un bloc) de N lignes vidéo actives successives du signal sortant est obtenue par lecture de l'emplacement dont l'adresse (qui sera en général différente de i) est désignée par l'élément d'ordre i d'une table d'adresses à N éléments, et la ligne vidéo active d'ordre i de la suite de N lignes vidéo actives successives du signal entrant correspondant au bloc qui suit chronologiquement le bloc en cours de lecture est écrite à l'emplacement qui vient d'être lu.
(2) Entre la fin de l'écriture de la dernière ligne d'une suite du signal entrant et le début de l'écriture de la première ligne de la suite suivante du signal (correspondant pratiquement à l'intervalle entre la fin de la lecture d'une suite du signal sortant et le début de la lecture de la suite suivante du signal sortant) la table d'adresses est modifée. Pour tout nombre entier i compris entre 1 et N, l'élément d'ordre i de la nouvelle table (table modifée) désigne le même emplacement que l'élément d'ordre j de l'ancienne table, où j est le transformé de i (au sens défini ci-dessus) dans la permutation à appliquer à la suite dont l'écriture vient d'être effectuée, cette permutation étant celle à prendre dans la succession C.

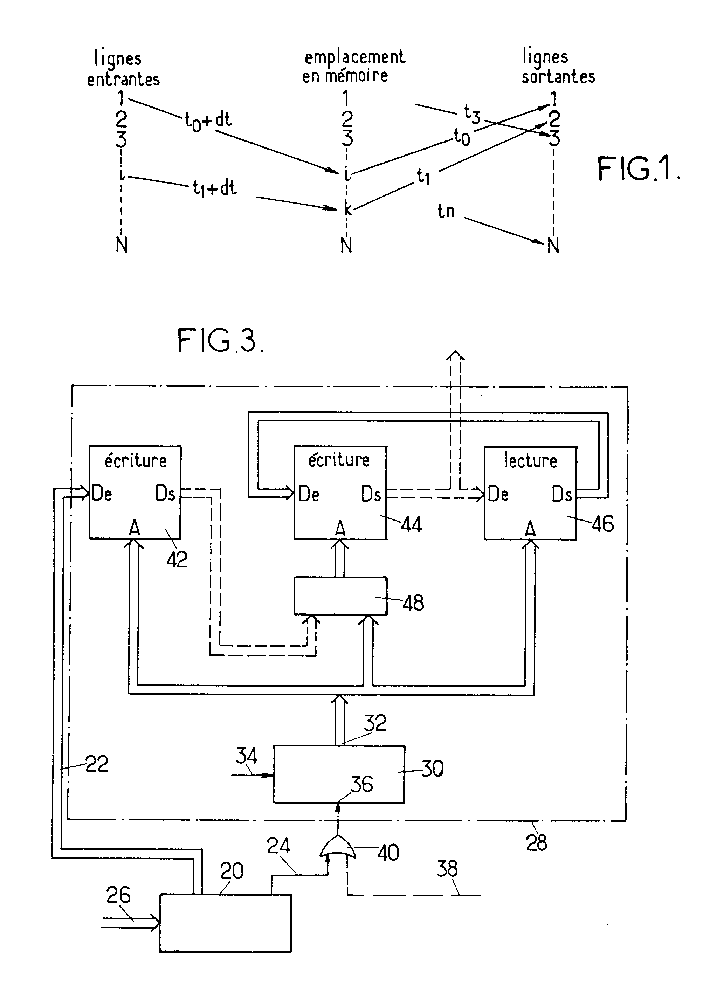

La figure 1 montre très schématiquement les opérations qui interviennent au cours de la première série de la séquence. La mémoire unique étant entièrement occupée par N lignes représentant un bloc, la première ligne sortante est lue, à l'instant t0, à un emplacement d'ordre i de la mémoire désignée par la table d'adresses. Immédiatement après, à l'instant t0 + dt, la première ligne entrante dans l'ordre chronologique est inscrite à l'emplacement d'adresse i en mémoire. Les opérations de lecture et d'écriture à l'emplacement d'ordre k désigné par la table d'adresse comme contenant la ligne sortante suivante sont effectuées aux instants t1 et t1 + dt. Le même couple d'opérations est répété jusqu'aux instants tN et tN + dt.

La seconde série d'opérations de la séquence est alors effectuée. Elle détermine les emplacements successifs de lecture en mémoire et les inscrit, en table d'adresses, en tenant compte de ce que les lignes entrantes successives n'ont pas été inscrites dans des emplacements de mémoire ayant des adresses successives dans l'ordre naturel, mais dans un autre ordre, qui a été mémorisé sous forme ; cet ordre est i, k, ..., dans l'exemple illustré en figure 1.

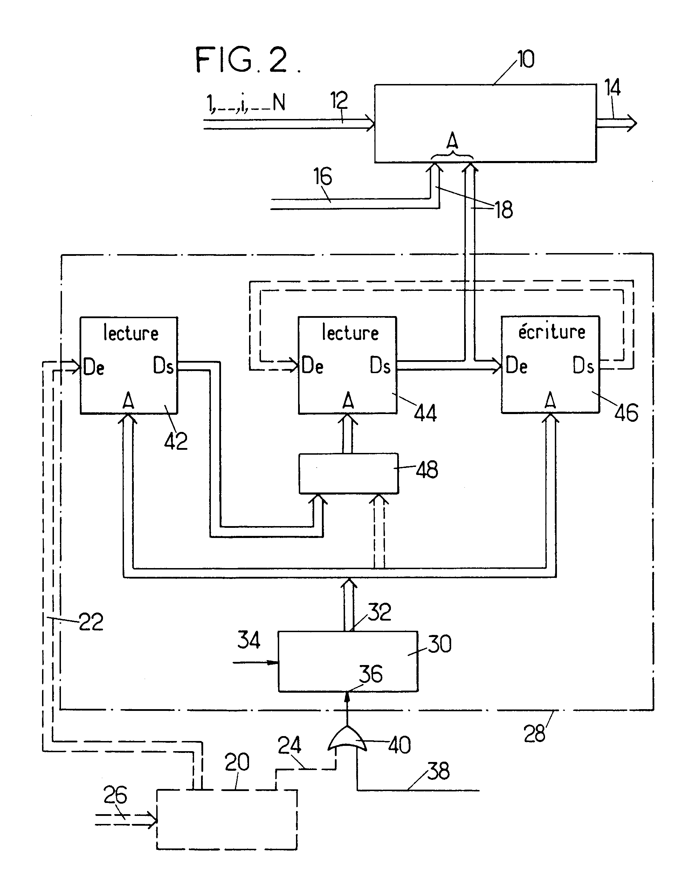

Les figures 2 et 3 montrent une constitution possible d'un dispositif de permutation destiné à être inséré dans un émetteur, en amont du modulateur.

Sur la figure 2, les composants du dispositif qui n'interviennent pas lors des opérations de lecture-écriture sont représentés en tirets ; sur la figure 3 les composants et les liaisons qui n'interviennent pas pendant la modification de la table d'adresses sont également représentés en tirets.

On supposera dans ce qui suit que le signal de télévision à traiter est un signal à 625 lignes, à N = 574 lignes actives et que le nombre d'échantillons dans chaque ligne est représentable par un nombre de 10 bits.

Le dispositif comporte une mémoire d'image 10 de capacité suffisante pour permettre de stocker tous les mots de données correspondant aux échantillons des lignes vidéo actives. On supposera, à titre d'exemple, que chaque mot est adressable à l'aide de 20 bits, dont 10 correspondent au numéro de l'échantillon dans la ligne active et dont les 10 autres identifient une ligne.

La mémoire d'image est organisée de façon que les 10 bits communs à l'ensemble des échantillons d'une ligne vidéo active donne l'adresse d'un emplacement de mémoire contenant l'ensemble de la ligne.

On ne décrira pas ici la mémoire d'image 10 car elle peut avoir une constitution classique. Elle est munie de bus d'entrée 12 et de sortie 14. Sur le bus d'entrée 12 sont appliqués les signaux de données correspondant aux échantillons successifs de lignes vidéo actives entrantes 1, ..., i, ..., N. Les données sortantes apparaissent sur le bus 14. La mémoire d'image comprend également une entrée d'adressage qui reçoit par un premier bus 16, les 10 bits correspondant aux numéros d'échantillons dans la ligne vidéo et, par bits correspondant aux numéros de lignes.

Le dispositif comporte également un composant de gestion des permutations 20 qui a pour fonction de mettre à jour la permutation de lignes à effectuer, à partir de la permutation d'ordre approprié dans la succession C.

Le composant 20 est prévu pour fournir, sur une sortie de données 22, pendant l'intervalle de temps séparant la fin de la dernière ligne vidéo active d'un bloc (constitué par une image) du début de la première ligne vidéo active de l'image suivante, une suite de 574 mots de 10 bits chacun, qui décrit la permutation à appliquer à l'image suivante. Cette suite est transférée, par mots de données correspondant chacun à un échantillon, vers un dispositif de gestion de mémoire 28 qui sera décrit plus loin.

Le mot d'ordre i (i étant compris entre 1 et 574) émis sur la sortie 22, en même temps qu'un signal de validation émis sur une sortie 24, contient le numéro de la ligne vidéo active du signal de télévision sortant qui est constituée par la ligne vidéo active d'ordre i du signal de télévision entrant dans le lignes vidéo actives entières représentant la même image.

Le composant de gestion des permutations peut être constitué par une logique combinatoire et reçoit sur une entrée 26 la succession des permutations à effectuer, fournie par exemple par un générateur pseudo-aléatoire.

Le dispositif de gestion de mémoire 28 comporte un compteur de numéros de lignes 30 cablé de façon à fournir sur sa sortie 32 un nombre de 10 bits généré de la façon suivante:
- le compteur est initialisé à la valeur 1 par un signal appliqué sur une entrée 34 immédiatement après chaque lecture de la dernière ligne vidéo active entière d'une image, avant lecture de la première ligne vidéo active d l'image suivante;
- le contenu du compteur est incrémenté de 1 lorsqu'il reçoit, sur une entrée 36, soit le signal de validation fourni sur la sortie 24, du composant de gestion des permutations, soit un signal 38 indiquant la fin d'une ligne vidéo active quelconque d'une image.

Ces deux signaux peuvent être appliqués sur l'entrée 36 par l'intermédiaire d'une porte OU 40.

Le dispositif de gestion de mémoires comporte encore trois mémoires vives 42, 44 et 46 qui seront respectivement dénommées mémoire de permutation, mémoire d'adresses A et mémoire d'adresses B.

Chacune de ces mémoires a une capacité suffisante pour stocker plus de 574 mots de chacun 10 éléments binaires (1024 mot par exemple). Chaque emplacement de stockage est adressable par un signal d'adresse de 10 bits.

Les entrées d'adressage de la mémoire de permutation 42 et de la mémoire d'adresses B 46 reçoivent le signal de sortie du compteur de numéros de lignes 30 destiné à la sélection de la ligne sortante. L'entrée d'adressage de la mémoire d'adresses A 44 est commutable par un composant 48 de façon recevoir:
- pendant les périodes de lecture/écriture, le signal d'identification de l'emplacement de données sortantes fournies par la mémoire de permutation 42;
- au cours des périodes de mise à jour de permutation, c'est-à-dire pendant les suppressions trame, les données fournies par le compteur de numéros de ligne 30, également appliquées aux entrées d'adressage des mémoires 42 et 46.

Le fonctionnement du dispositif qui vient d'être décrit est alors le suivant:
(1) Pendant les période de lecture-écriture, c'est-à-dire depuis le début de la première ligne vidéo active entière jusqu'à la fin de la dernière ligne vidéo active entière d'une image:
   - la mémoire de permutation 42 est en mode lecture, la mémoire d'adresses B est en mode écriture et la mémoire d'adresses A est en mode lecture (la commutation d'un mode à l'autre étant assurée par un séquenceur non représenté);
   - chaque mot de 10 bits de données qui apparaît sur la sortie de la mémoire de permutation 42 est appliqué sur l'entrée d'adressage de la mémoire d'adresses A 44 ;
   - chaque mot de 10 bits fourni par la sortie de données de la mémoire d'adresses 44 constitue les 10 bits de poids fort d'un signal d'adressage de la mémoire d'images 10 et constitue également un mot de 10 bits appliqué sur l'entrée de données de la mémoire d'adresses B ; c'est ce stockage qui permet de tenir compte de ce que la ligne sortante qui devrait correspondre par exemple à la première ligne entrante du bloc devra être lue non pas à l'adresse 1 mais à une adresse différente.
(2) Avant chaque période de suppression trame, le séquenceur change les liaisons de la figure 1 en celles de la figure 2. Ces dernières liaisons subsistent de la fin de la dernière ligne vidéo active entière d'une image jusqu'au début de la première ligne vidéo active entière de l'image suivante.

Les mémoires de permutation 42, d'adresses A 44 et d'adresses B 46 sont alors respectivement en mode écriture, en mode écriture et en mode lecture.

Les 10 bits du signal de données en sortie du composant de gestion des permutations 20 sont appliquées, par le bus 22, à l'entrée de données de la mémoire de permutation 42. Le composant de commutation 48 relie la sortie de données de la mémoire de permutation 42 à l'entrée d'adressage de la mémoire d'adresses 44. Les données (représentant des adresses) prélevées en sortie de la mémoire d'adresses B 46 sont transférées dans la mémoire d'adresses A.

Le dispositif doit être complété par des moyens (non représentés), de nature classique, d'initialisation et de séquencement comportant une horloge. L'initialisation est prévue pour que, avant apparition de la première ligne vidéo active entière de la première image traitée, les mémoires d'adresses A et B continnent l'une et l'autre, aux adresses 1, 2, ..., i, ..., 574, des mots représentant les nombres successifs de 1 à 574.

Les composants cablés peuvent être remplacés par un processeur programmé pour calculer la table d'adresses à utiliser pour produire les signaux d'adresses de la mémoire d'images, pendant l'intervalle de suppression de trame séparant deux images successives.

## Revendications

1. Dispositif de permutation, en temps réel et par bloc, de lignes d'un signal de télévision entrant, chaque bloc étant constitué de N lignes de données vidéo actives chronologiquement successives 1, ..., N, permettant d'obtenir un signal sortant constitué de N lignes de données vidéo actives chronologiquement successives, dans un ordre découlant de l'ordre d'origine par une loi de permutation prédéterminée, éventuellement différente d'un bloc au suivant, comprenant :
- une mémoire d'images (10) de capacité suffisante pour stocker tous les mots de données correspondant à tous les échantillons de toutes les lignes de données vidéo actives d'un bloc, munie d'une entrée (12) de réception de données entrantes, d'une sortie (14) de données sortantes et d'une entrée d'adressage (18),
- des moyens (20) de gestion des permutations prévus pour fournir, dans l'intervalle de temps séparant les blocs successifs, une liste d'adresses décrivant la permutation à appliquer au bloc suivant à permuter,
- une mémoire de permutation (42) destinée à stocker la liste de permutation à effectuer en des emplacements successifs adressables,
- deux mémoires d'adresses (44,46) dont les entrées et sorties de données sont rebouclées l'une sur l'autre, l'une des mémoires d'adresses (44) ayant une entrée d'adressage reliable à la sortie de la mémoire de permutations et une sortie de données prévue pour être reliée à l'entrée d'adressage de la mémoire d'images (10) lors des permutations alors que ladite mémoire fonctionne en lecture, l'autre mémoire d'adresses fonctionnant en écriture pour recevoir le contenu de la première mémoire d'adresses (44) lors des permutations et en lecture pour charger la première mémoire d'adresses entre les permutations par bloc, et
- un compteur de numéros de ligne (30) incrémenté à la cadence de l'apparition des lignes, dont la sortie de données est reliée en permanence à l'entrée d'adressage de la mémoire de permutation (42) et de la seconde mémoire d'adresses (46) et attaque l'entrée d'adressage de la première mémoire d'adresses (44) pendant les mises à jour de permutation de lignes.

2. Dispositif selon la revendication 1, caractérisé en ce que la dite mémoire d'images (10) a une capacité correspondant à l'ensemble des lignes utiles d'une trame ou d'une image de télévision, les dites lignes utiles constituant un bloc.

3. Dispositif selon la revendication 2, caractérisé en ce que les dits moyens (20) de gestion sont prévus pour modifier la liste d'adresses pendant l'intervalle de suppression trame du signal de télévision.

## Claims

1. Device for real time block-wise permutation of an incoming television signal, each block comprising N lines of time successive active video data lines 1, ..., N enabling to obtain an outgoing signal comprising N time successive active video data lines, in an order which is derived from the original order by a predetermined permutation law, possibly different in a block and the following block, comprising:
- an image memory (10) of sufficient capacity to store all data words corresponding to all samples of all active video data lines of one block, provided with an input (12) for receiving the incoming data, an output (14) for the out going data and an address input (18),
- permutation managing means (20) arranged for delivering, in the time interval separating successive blocks, a list of addresses which describes the permutation to be applied to the next block to be permuted,
- a permutation memory (42) for storing the list of permutations to be carried out at successive addressable locations,
- two address memories (44,46) whose data inputs and data outputs are mutually fed back, one of the address memories (44) having an address input connectable to the output of the permutation memory and a data output arranged to be connected to the address input of the image memory (10) during the permutations when said memory operates in read-out mode, the other address memory then operating in write-in mode for receiving the contents of the first memory address (44) during the permutations and in read-out mode for loading the first address memory between the block permutations, and
a line number counter (30) which counts up at the rate of line appearance, whose data output is continuously connected to the address inputs of the permutation memory (42) and the address input of the second address memory (46) and drives the address input of the first address memory during up-dating of line permutation.

2. Device according to claim 1, characterized in that said image memory (10) has a capacity corresponding to all useful lines of a television field or frame, said useful lines constituting one block.

3. Device according to claim 2, characterized in that said managing means (20) are arranged for modifying the address list during the field blanking interval of the television signal.

## Patentansprüche

1. Vorrichtung zur blockweisen Permutation der Zeilen eines Fernseheingangssignals in Echtzeit, wobei jeder Block von N chronologisch aufeinanderfolgenden aktiven Bildsignaldatenzeilen 1, ..., N gebildet ist, welche es ermöglicht, ein von N chronologisch aufeinanderfolgenden, aktiven Bildsignaldatenzeilen gebildetes Ausgangssignal in einer Reihenfolge zu erhalten, welche von der ursprünglichen Reihenfolge durch eine vorbestimmte, eventuell von einem Block zum nächsten unterschiedliche Permutationsregel abgeleitet ist, umfassend:
- einen Bildspeicher (10), dessen Kapazität ausreicht, um alle Datenworte zu speichern, welche allen Stichprobenwerten aller aktiven Bildsignaldatenzeilen eines Blocks entsprechen, welcher Speicher einen Eingang (12) zum Empfang von Eingangsdaten, einen Ausgang (14) für die Ausgangsdaten und einen Adressierungseingang (18) aufweist,
- Mittel (20) zum Verwalten der vorgesehenen Permutationen, um in dem die aufeinanderfolgenden Blöcke trennenden Zeitintervall eine Adreßliste zu liefern, welche die auf den folgenden zu permutierenden Block anzuwendende Permutation beschreibt,
- einen Permutationsspeicher (42), der dazu bestimmt ist, die Liste der in aufeinanderfolgenden, adressierbaren Plätzen durchzuführenden Permutation zu speichern,
- zwei Adreßspeicher (44,46) deren Dateneingänge und -ausgänge schleifenartig miteinander verbunden sind, wobei einer der Adreßspeicher (44) einen mit dem Ausgang des Permutationsspeichers verbindbaren Adressierungseingang und einen Datenausgang aufweist, der dazu bestimmt ist, mit dem Adressierungseingang des Bildspeichers (10) während der Permutationen verbunden zu sein, wenn besagter Speicher im Auslesebetrieb arbeitet, wobei ferner der andere Adreßspeicher im Schreibbetrieb arbeitet, um den Inhalt des ersten Adreßspeichers (44) während der Permutationen zu empfangen und im Auslesebetrieb, um den ersten Adreßspeicher zwischen den blockweisen Permutationen zu laden, und
- einen Zeilennummernzähler (30), der im Takt des Erscheinens der Zeilen inkrementiert wird, und dessen Datenausgang permant mit dem Adressierungseingang des Permutationsspeichers (42) und des zweiten Adreßspeichers (46) verbunden ist und der auf den Adressierungseingang des ersten Adreßspeichers (44) während der Aktualisierungen der Zeilenpermutation gelegt ist.

2. Vorrichtung nach Anspruch 1, dadurch gekennzeichnet, daß der Bildspeicher (10) eine Kapazität aufweist, welche der Gesamtheit der nutzbaren Zeilen eines Halbbilds oder eines Fernsehbilds entspricht, wobei die nutzbaren Zeilen einen Block bilden.

3. Vorrichtung nach Anspruch 2, dadurch gekennzeichnet, daß die Mittel (20) zum Verwalten dazu vorgesehen sind, die Adreßliste während des Halbbildaustastintervalls des Fernsehsignals zu modifizieren.
